# EUROPEAN PATENT SPECIFICATION

(11) **EP 1 614 503 B1**
(45) Date of publication and mention of the grant of the patent: **12.12.2007**
(21) Application number: 05014329.6
(22) Date of filing: 01.07.2005
(51) Int. Cl.: B23Q 1/01, B23Q 11/00

(54) **Machine tool**
Werkzeugmaschine
Machine outil

(30) Priority: 08.07.2004 JP 2004201311
(43) Date of publication of application: 11.01.2006
(73) Proprietor: OKUMA CORPORATION, Aichi 480-0193 (JP)
(72) Inventor: Furuhashi, Seiji, Oguchi-cho Niwa-gun Aichi 480-0193 (JP); Takenaka, Koji, Oguchi-cho Niwa-gun Aichi 480-0193 (JP)
(74) Representative: Paul, Dieter-Alfred

(56) References cited:
- US-A- 4 658 485
- PATENT ABSTRACTS OF JAPAN vol. 012, no. 010 (M-658), 13 January 1988 (1988-01-13) & JP 62 173128 A (YAMAZAKI MAZAK CORP), 30 July 1987 (1987-07-30)
- PATENT ABSTRACTS OF JAPAN vol. 014, no. 416 (M-1021), 7 September 1990 (1990-09-07) & JP 02 160440 A (HONDA MOTOR CO LTD), 20 June 1990 (1990-06-20)
- PATENT ABSTRACTS OF JAPAN vol. 004, no. 143 (M-035), 8 October 1980 (1980-10-08) & JP 55 096209 A (MITSUBISHI HEAVY IND LTD; others: 01), 22 July 1980 (1980-07-22)
- PATENT ABSTRACTS OF JAPAN vol. 011, no. 057 (M-564), 21 February 1987 (1987-02-21) & JP 61 219543 A (KOSHIN SEISAKUSHO:KK), 29 September 1986 (1986-09-29)

## Description

The present invention relates to machine tools, and more particularly to machine tools having a gate structure, according to the preamble of claim 1.

Machine tools are already widely known which comprise a table supported by a bed forwardly and rearwardly movably, a pair of left and right columns arranged upright on opposite sides of the path of movement of the table, a cross rail supported by the pair of columns and upwardly and downwardly movably, and a spindle head supported by the cross rail leftwardly and rearwardy movably. A vertical guide rail and a vertical screw rod are provided on the front side of the columns. The rear side of the cross rail is provided with a vertical guide groove having the vertical guide rail slidably fitted therein and with an internally threaded member screwed on the vertical screw rod. The front side of the cross rail is provided with a horizontal guide rail and a horizontal screw rod. The spindle head has a rear side provided with a horizontal guide groove having the horizontal guide rail slidably fitted therein and with an internally threaded member screwed on the horizontal screw rod.

The known machine tool has the problem of being subjected to unbalanced loads that will adversely affect the accuracy of machining because the cross rail and the spindle head are projected forward from the pair of columns and the cross rail, respectively.

Further with the upward and downward movement of the cross rail, the heat generated by the vertical guide rail and the vertical screw rod is released only at the front side of each column, and with the leftward and rightward movement of the spindle head, the heat generated by the horizontal guide rail and the horizontal screw rod is released only at the front side of the cross rail. When heat is thus produced locally, there arises the problem that the local deformation of the cross rail or columns will shift the position of the spindle to impair the accuracy of machining.

The machine tool to be described below is proposed in order to overcome these problems (see, for example, JP-A No. 62-173128).

While this machine tool basically has the same construction as the machine tool described above, each of the columns comprises divided front and rear two members. At each of the left and right sides, the end of the cross rail is vertically slidably held between the front and rear column members. The cross rail has a space vertically extending therethrough and having the spindle head fitted therein leftwardly and rightwardly movably. The two column members at the left and right, i.e., the four column members of the entire machine tool are each provided with cross rail drive means.

Thus, the machine tool requires four units of cross rail drive means and is therefore expensive. Furthermore, difficulty is encountered in machining and assembling the tool components with high accuracy. The tool has another problem in that it is difficult to control the four units of cross rail drive means in synchronism.

### SUMMARY OF THE INVENTION.

An object of the present invention is to provide a machine tool which is free of unbalanced loads and locally concentrated generation of heat, is inexpensive and assures the accuracy of machining. According to the present invention this object is solved by the features of claim 1.

With the machine tool of the present invention, the cross rail drive means and the cross rail guide means are provided on the opposed sides of the pair of columns which sides are opposed to each other, so that even if heat is generated by the cross rail drive means and the cross rail guide means for moving the cross rail upward and downward for the operation of the machine tool, the spindle can be prevented from becoming displaced forward or rearward unlike the conventional machine tool wherein the cross rail is provided on the front side of the columns.

In this case, the pair of columns are formed symmetrically about respective centerlines thereof with respect to a front-rear direction, the centerlines of the columns being in alignment with each other, and the cross rail is formed symmetrically about a centerline thereof with respect to the front-rear direction, the cross rail being movable upward and downward with the centerline of the columns with respect to the front-rear direction in alignment with the centerline of the cross rail with respect to the front-rear direction. Portions of the tool then become equal in thermal capacity with respect to the front-rear direction, whereby the spindle can be prevented from becoming displaced forward or rearward more effectively.

Preferably, the cross rail drive means or the cross rail guide means is symmetrical about the column centerline with respect to the front-rear direction.

The cross rail has a space extending therethrough vertically and having the spindle head inserted into the space with a clearance provided on each of front and rear sides thereof, the spindle head being symmetrical about the cross rail centerline with respect to the front-rear direction, spindle head drive means being provided for driving the spindle head leftward and rightward relative to the cross rail, spindle head guide means being provided for guiding the spindle head leftward and rightward, the spindle head being movable leftward and rightward with the cross rail centerline with respect to the front-rear direction in alignment with a center line of the spindle head with respect to the front-rear direction. Even if heat is generated by the spindle head drive means or the spindle head guide means when the spindle head is moved leftward and rightward for the operation of the machine tool, the spindle can be prevented from becoming shifted forward or rearward unlike the spindle of the prior art which is provided on the front side of the columns.

In this case, the spindle guide means and the spindle drive means are made preferably symmetrical about the cross rail centerline with respect to the front-rear direction.
FIG. 1 is a perspective view of a machine tool according to the invention;
FIG. 2 is a sectional views showing columns of the tool and the vicinity thereof on an enlarged scale; and
FIG. 3 is a sectional view showing a cross rail of the tool and the vicinity thereof on an enlarged scale.

An embodiment of the invention will be described below with reference to the drawings.

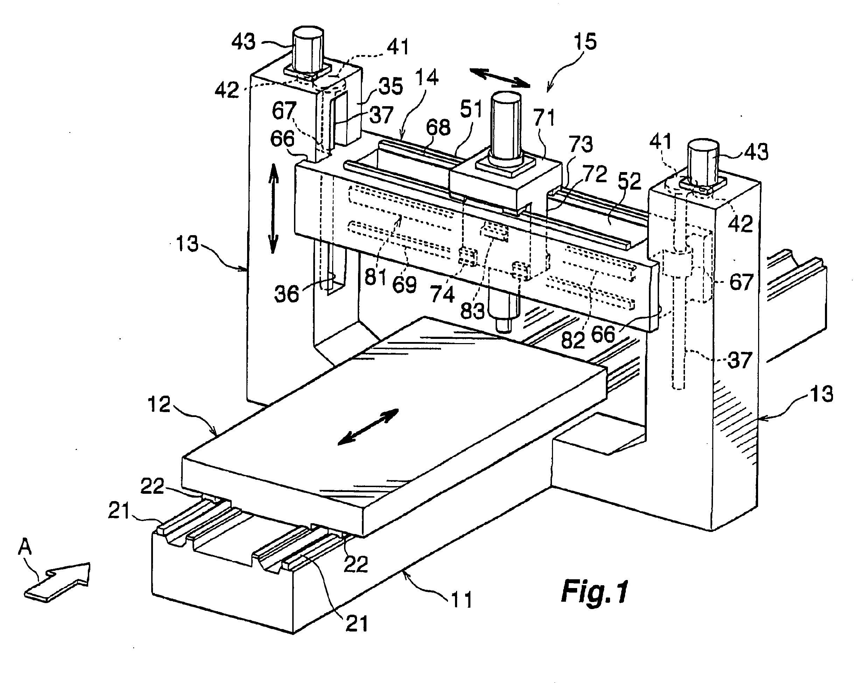

In the following description, the terms "front" and "rear" refer to the side indicated by the arrow A in FIG. 1 and to the opposite side, respectively, and the terms "left" and "right" are used for the machine as it is seen from the rear forward.

FIG. 1 shows a machine tool which comprises a bed 11, a table 12 supported by the bed 11 forwardly and rearwardly movably, a pair of left and right columns 13 provided upright on opposite sides of the path of movement of the table 12, a cross rail 14 supported by the columns 13 upwardly and downwardly movably, and a spindle head 15 supported by the cross rail 14 leftwardly and rightwardly movably.

The bed 11 is in the form of a rectangular box extending in the front-rear direction, and has four guide rails 21 provided on its upper side close to the left and right side edges thereof and extending in the front-rear direction.

The table 12 is in the form of a rectangular plate elongated in the front-rear direction and has on its lower side slide members 22 fitting to the front-rear guide rail 21.

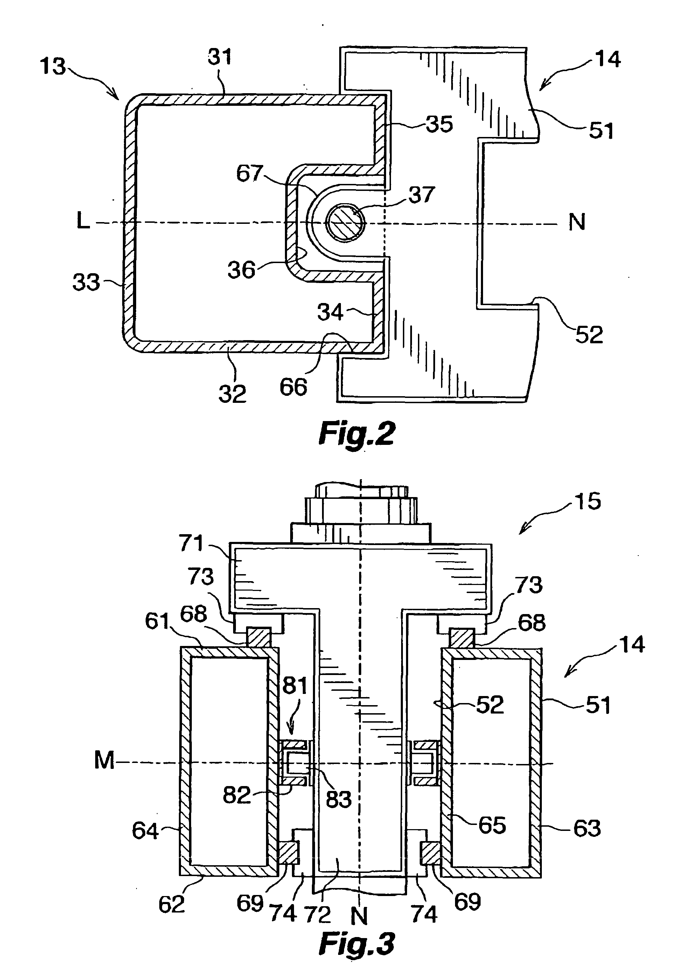

Although facing toward opposite directions with respect to the left-right direction, the columns 13 are of the same construction. To describe with reference to the left column shown in FIG. 2, the column is in the form of a vertical square tube having a generally square cross section and comprises a front side wall 31, rear side wall 32, left side wall 33 and right side wall 34. The column has a centerline L with respect to the front-rear direction at the position at equal distances from the front side wall 31 and the rear side wall 32. The cross section of the column 13 is symmetrical about a line, i.e., about this centerline L with respect to the front-rear direction.

The right side wall 34 and right edge portions of the front side wall 31 and the rear side wall 32 integral with the wall 34 provide guide rails 35 extending vertically. The right side wall 34 provides the outer ends of the guide rails 35.

The right side wall 34 has a groove 36 which is formed by bending the wall 34 itself generally into a U shape. The groove 36 extends vertically on the centerline L of the column 13 and is symmetrical about the centerline L.

A vertical screw rod 37 is rotatably supported by upper and lower end walls of the groove 36 so as to extend through the groove 36 on the centerline L. A driven gear 41 is fixedly mounted on the upper end of the screw rod 37. Since the two columns 13 face toward opposite sides with respect to the left-right direction and has the same construction, the guide rails 35 and screw rods 37 of the columns are provided on their sides opposed to each other. The driven gear 41 is in mesh with a drive gear 42, which is fixed to the rotating shaft of a motor 43 mounted on the top wall of the column 13 and facing downward.

The cross rail 14 comprises a hollow cross rail main body 51 in the form of a rectangle elongated in the left-right direction when seen from above, and a center space 52 extending vertically through, and surrounded by, the main body 51.

The cross rail main body 51 comprises a top wall 61, bottom wall 62, front side wall 63, rear side wall 64 and peripheral wall 65 defining the center space 52. The cross rail 14 has a centerline M with respect to the vertical direction at the position at equal distances from the top wall 61 and the bottom wall 62. The cross rail 14 has a centerline N with respect to the front-rear direction at the position at equal distances from the front side wall 63 and the rear side wall 64. With respect to the front-rear direction, the centerline N of the cross rail 14 is in alignment with the center line L of the column 13. The cross section of the cross rail main body 51 is symmetrical about the centerline M of the rail with respect to the vertical direction and about the centerline N of the rail with respect to the front-rear direction.

A guide groove 66 in the form of an indentation in cross section is formed in each of the left and right end walls of the cross rail main body 51 and has fitted therein the guide rails 35 of the column 13. The guide rails 35 and the guide groove 66 provide cross rail guide means. The guide groove 66 is symmetrical about the centerline N of the cross rail with respect to the front-rear direction. An externally threaded member 67 screwed on the screw rod 37 is provided at the upper end of a bottom wall defining the guide groove 66 integrally with the cross rail main body 51. The screw rod 37, the motor 43 for driving the rod and the externally threaded member 67 provide cross rail drive means.

A pair of front and rear horizontal upper support rails 68 extending in the left-right direction are provided respectively on the front and rear edge portions defining the upper-end opening of the space 52 in the top wall 61. A pair of front and rear opposed horizontal lower support rails 69 extending in the left-right direction are provided respectively on lower edge areas of front and rear opposed portions of the peripheral wall 65. The upper support rails 68, as well as the lower support rails 69, are symmetrical about the centerline N of the cross rail with respect to the front-rear direction.

The spindle head 15, which is generally T-shaped in cross section, comprises a horizontal upper member 71 mounted on both the upper support rails 68, and a vertical lower member 72 extending downward from the upper member 71 into the center space 52. The cross section of the spindle head 15 is symmetrical about the centerline N of the cross rail with respect to the front-rear direction.

The upper member 71 is provided on the bottom side thereof with upper slide members 73 fitting to the respective upper support rails 68. The upper member 71, lower member 72, upper support rails 68 and lower support rails 69 provide means for guiding the spindle head 15. The lower member 72 is provided, on lower edge portions of front and rear opposite sides thereof, with slide members 74 fitting respectively to the lower support rails 69.

Linear motors 81 serving as spindle head drive means are provided in the center space 52 between the front and rear opposed surfaces of the peripheral wall 65 and the front and rear opposite sides of the lower member 72. Each of the linear motors 81 comprises a stationary side 82 fixed to the front or rear surface of the peripheral wall 65, and a movable side 83 fixed to the front or rear side of the lower member 72 opposed to the peripheral wall surface. The linear motor 81 is symmetrical about the centerline M of the cross rail 14 with respect to the vertical direction.

When the machine tool described above is used for machining, heat will be generated, for example, by a motor for rotatingly driving the unillustrated spindle provided on the spindle head 15, by machining point, and by the bearings supporting the unillustrated spindle. Since the spindle head is in line symmetry in cross section, the thermal deformation of the spindle head becomes equivalent with respect to the front-rear direction, preventing the spindle from becoming displaced with respect to the front-rear direction. Although the heat is transmitted also to the cross rail 14 by way of the upper slide members 73, lower side members 74, upper support rails 68 and lower support rails 69, or through the air between the spindle head 15 and the cross rail 14, the upper slide members 73, lower side members 74, upper support rails 68 and lower support rails 69 are arranged in line symmetry in cross section, so that the quantities of heat to be transmitted are equal, while the cross rail 14 is also in line symmetry in cross section to result in equivalent thermal deformation. The spindle is therefore prevented from becoming displaced with respect to the front-rear direction.

Since the linear motors 81 are symmetrical about the centerline M of the cross rail with respect to the vertical direction, and the spindle head 15 and the cross rail 14 are in line symmetry in cross section, the heat generated by the linear motors 81 is delivered to the spindle head 15 and the cross rail 14 equivalently, with the result that the thermal deformation of the cross rail 14 and the spindle head 15 becomes equivalent with respect to the front-rear direction. This precludes the spindle from becoming displaced with respect to the front-rear direction.

Because the columns 13 and the cross rail 14 are in line symmetry with respect to the front-rear direction, the heat generated by the upward and downward movement of the cross rail 14 is equivalent for the left and right columns 13 and is transmitted to the cross rail also similarly equivalently. The thermal deformation of the columns 13 and the cross rail 14 is therefore equivalent with respect to the front-rear direction, whereby the spindle is prevented from shifting with respect to the front-rear direction.

The screw rod 37, motor 43 for driving the rod 37, internally threaded member 67, driven gear 41 and drive gear 42 are used as means for driving the cross rail 14, whereas the driven gear 41 and the drive gear 42 are not always needed; if a motor is selected which affords the required output and rotation, the motor may be coupled directly to the screw rod 37. The linear motor described as means for driving the spindle may alternatively be used as the cross rail drive means. In this case, the stationary side 82 may be provided on the column 13 in place of the screw rod 37, and the movable side 82 on the cross rail 14 in place of the internally threaded member 67.

Although the linear motor 81 is used as the spindle drive means, a screw rod may be used for driving. In this case, the screw rod 37 is provided on the cross rail 14 in place of the stationary side 82, and the internally threaded member 67 on the spindle head 15 in place of the movable side 83.

Although the guide rails 35 and guide groove 66 provide a slide structure for use as cross rail guide means, the upper slide members 73, lower side members 74, upper support rails 68 and lower support rails 69 already described as spindle head guide means may provide antifriction guide structure for this purpose. In this case, the support rails are provided vertically on the column 13 in place of the guide rails 35, and a member corresponding to the upper slide member on the cross rail in place of the guide groove 66.

Similarly the spindle head guide means may comprise a slide structure. In this case, the support rails are replaced by guide rails 35 as arranged horizontally on the cross rail 14, and the upper and lower slide members 73, 74 are replaced by guide grooves 66 formed in the spindle head.

The linear motors 81 are arranged on the centerline with respect to the vertical direction in view of the displacement of the spindle with respect to the vertical direction, whereas this arrangement is not always needed. If the displacement in the front-rear direction is merely considered, the linear motors 81 may be shifted to an upper or lower position insofar as they are arranged symmetrically about a line with respect to the front-rear direction. The position of the screw rod 37 or the guide rail 35, and the shape of the cross rail 14, column 13 or spindle head 15 need not always be strictly symmetric about a line but can be somewhat modified in position or shape in view of other design problems insofar as the accuracy of positioning can be ensured as required.

## Claims

1. A machine tool comprising a table (12) supported by a bed 11 forwardly and rearwardly movable, a pair of left and right columns (13) provided upright on opposite sides of a path of movement of the table (12), a cross rail (14) supported by the columns (13) upwardly and downwardly movably, cross rail drive means (41, 42, 43) for driving the cross rail (14) upward and downward relative to the columns (13), cross rail guide means (35, 66) for guiding the cross rail (14) upward and downward, and a spindle head (15) supported by the cross rail (14) leftwardly and rightwardly movably, **characterized in that** the cross rail drive means (37) is provided on the right and left columns (13) respectively, the cross rail guide means (35) is provided on sides of the right and left columns opposed to each other respectively, and both ends of the cross rail are connected to the cross rail guide means (35) on the right and left columns respectively, wherein there is only one column at each end of the cross rail (14).

2. A machine tool according to claim 1 wherein the pair of columns (13) are formed symmetrically about respective centerlines (L) thereof with respect to a front-rear direction, the centerlines (L) of the columns (13) being in alignment with each other, and the cross rail (14) is formed symmetrically about a centerline (N) thereof with respect to the front-rear direction, the cross rail (14) being movable upward and downward with the centerline (L) of the columns (13) with respect to the front-rear direction in alignment with the centerline (N) of the cross rail (14) with respect to the front-rear direction.

3. A machine tool according to claim 2 wherein the cross rail drive means (41, 42, 43) is symmetrical about the centerline (L) of the columns (13) with respect to the front-rear direction.

4. A machine tool according to claim 2 or 3 wherein the cross rail guide means (35, 66) is symmetrical about the centerline (L) of the columns (13) with respect to the front-rear direction.

5. A machine tool according to any one of claims 1 to 4 wherein the cross rail (14) has a space (52) extending therethrough vertically and having the spindle head (15) inserted into the space (52) with a clearance provided on each of front and rear sides thereof,
the spindle head (15) being symmetrical about the cross rail centerline with respect to the front-rear direction,
spindle head drive means (81) being provided for driving the spindle head (15) leftward and rightward relative to the cross rail (14),
the spindle head (15) being movable leftward and rightward with the cross rail centerline (N) with respect to the front-rear direction in alignment with a centerline of the spindle head (15) with respect to the front-rear direction.

6. A machine tool according to claim 5 wherein the spindle head guide means (81) is symmetrical about the cross rail centerline (N) with respect to the front-rear direction.

7. A machine tool according to claim 5 or 6 wherein the spindle head drive means is symmetrical about the cross rail centerline (N) with respect to the front rear direction.

## Patentansprüche

1. Eine Werkzeugmaschine mit einem Tisch (12), welcher von einem Bett (11) gehalten wird, das vorwärts und rückwärts beweglich ist, einem Paar von linken und rechten Säulen (13), welche aufrecht auf gegenüberliegenden Seiten eines Bewegungsweges des Tisches (12) ausgebildet sind, einer Querschiene (14), die von den Säulen (13) gehalten wird und die nach oben und unten beweglich ist, einem Querschienenantriebsmittel (41, 42, 43), um die Querschiene (14) nach oben und nach unten relativ zu den Säulen (13) zu fahren, einem Querschienenführungsmittel (35, 66), um die Querschiene (14) nach oben und nach unten zu führen, und einem Spindelkopf (15), welcher von der Querschiene (14) gehalten wird und nach links und rechts beweglich ist, **dadurch gekennzeichnet, dass** das Querschienenantriebsmittel (37) jeweils an den rechten und linken Säulen (13) ausgebildet ist, das Querschienenführungsmittel (35) auf Seiten der rechten und linken Säulen ausgebildet ist, die jeweils einander gegenüberliegen, und beide Enden der Querschiene mit dem Querschienenführungsmittel (35) jeweils an den rechten und linken Säulen verbunden sind, wobei nur eine Säule an jedem Ende der Querschiene (14) vorhanden ist.

2. Werkzeugmaschine gemäß Anspruch 1, worin das Paar der Säulen (13) symmetrisch um deren jeweilige Mittellinie (L) mit Bezug auf eine Vorne-Hinten-Richtung ausgebildet sind, wobei die Mittellinien (L) der Säulen (13) fluchtend miteinander angeordnet sind und die Querschiene (14) symmetrisch um eine ihrer Mittellinien mit Bezug auf die Vorne-Hinten-Richtung ausgebildet ist, und wobei die Querschiene (14) mit der Mittellinie (L) der Säulen (13) mit Bezug auf die Vorne-Hinten-Richtung fluchtend mit der Mittellinie (N) der Querschiene (14) mit Bezug auf die Vorne-Hinten-Richtung vorwärts und rückwärts beweglich ist.

3. Eine Werkzeugmaschine gemäß Anspruch 2, worin das Querschienenantriebsmittel (41, 42, 43) symmetrisch um die Mittellinie (L) der Säulen (13) mit Bezug auf die Vorne-Hinten-Richtung ausgebildet ist.

4. Eine Werkzeugmaschine gemäß Anspruch 2 oder 3, worin das Querschienenführungsmittel (35, 66) symmetrisch um die Mittellinie der Säulen (13) mit Bezug auf die Vorne-Hinten-Richtung ausgebildet ist.

5. Eine Werkzeugmaschine gemäß einem der Ansprüche 1 bis 4, worin die Querschiene (14) einen Raum (52) aufweist, der sich hierdurch vertikal erstreckt und den Spindelkopf (15) aufweist, der in dem Raum (52) eingesetzt ist, wobei eine Öffnung auf jeder seiner vorderen und hinteren Seiten ausgebildet ist,
und wobei der Spindelkopf (15) symmetrisch um die Mittellinie der Querschiene mit Bezug auf die Vorne-Hinten-Richtung ausgebildet ist,
und wobei ein Spindelkopfantriebsmittel (81) bereitgestellt wird, um den Spindelkopf (15) nach links und nach rechts relativ zu der Querschiene (14) zu fahren,
und wobei der Spindelkopf (15) nach links und nach rechts mit der Mittellinie (N) der Querschiene mit Bezug auf die Vorne-Hinten-Richtung fluchtend mit einer Mittellinie des Spindelkopfs (15) mit Bezug auf die Vorne-Hinten-Richtung beweglich ist.

6. Eine Werkzeugmaschine gemäß Anspruch 5, worin das Spindelkopfführungsmittel (81) symmetrisch um die Mittellinie (N) der Querschiene mit Bezug auf die Vorne-Hinten-Richtung ausgebildet ist.

7. Eine Werkzeugmaschine gemäß Anspruch 5 oder 6, worin das Spindelkopfantriebsmittel symmetrisch um die Mittellinie (N) der Querschiene mit Bezug auf die Vorne-Hinten-Richtung ausgebildet ist.

## Revendications

1. Machine-outil comprenant une table (12) soutenue par un lit (11) mobile en avant et en arrière, une paire de colonnes gauche et droite (13) pourvues exactement sur les côtés opposés d'une voie de mouvement de la table (12), un rail transversal (14) soutenu par les colonnes (13) d'une manière mobile en haut et en bas, les moyens d'actionnement du rail transversal (41, 42, 43) pour amener le rail transversal (14) en haut et en bas à l'égard des colonnes (13), les moyens de guidage du rail transversal (35, 66) pour guider le rail transversal (14) en haut et en bas, et une tête porte-outil (15) soutenue par le rail transversal (14), de manière mobile à gauche et à droite, **caractérisée en ce que** le moyen d'actionnement du rail transversal (37) est pourvu sur les colonnes droite respectivement gauche (13), le moyen de guidage du rail transversal (35) est pourvu sur les côtés des colonnes droite et gauche opposés respectivement l'un à l'autre, et toutes les deux extrémités du rail transversal sont connectées au moyen de guidage du rail transversal (35) respectivement sur les colonnes droite et gauche, où il y a seulement une colonne à chaque extrémité du rail transversal (14).

2. Machine-outil selon la revendication 1, où la paire de colonnes (13) sont formées de manière symétrique autour les lignes de centre (L) respectives de celles-ci à l'égard d'une direction avant-arrière, les lignes de centre (L) des colonnes (13) étant en alignement l'une avec l'autre, et le rail transversal (14) est formé de manière symétrique autour une ligne de centre (N) de celui à l'égard de la direction avant-arrière, le rail transversal (14) étant mobile en haut et en bas avec la ligne de centre (L) des colonnes (13) à l'égard de la direction avant-arrière en alignement avec la ligne de centre (N) du rail transversal (14) à l'égard de la direction avant-arrière.

3. Machine-outil selon la revendication 2 où le moyen d'actionnement du rail transversal (41, 42, 43) est symétrique autour la ligne de centre (L) des colonnes (13) à l'égard de la direction avant-arrière.

4. Machine-outil selon la revendication 2 ou 3 où le moyen de guidage du rail transversal (35, 66) est symétrique autour la ligne de centre (L) des colonnes (13) à l'égard de la direction avant-arrière.

5. Machine-outil selon l'une quelconque des revendications 1 à 4 où le rail transversal (14) a un espace (52) s'étendant partout verticalement et ayant une tête porte-outil (15) insérée dans l'espace (52) avec un jeu pourvu sur chacun des côtés avant et arrière de celui,
- une tête porte-outil (15) étant symétrique autour la ligne de centre du rail transversal à l'égard de la direction avant-arrière.
- le moyen d'actionnement de la tête porte-outil (81) étant pourvu pour amener la tête porte-outil (15) à gauche et à droite à l'égard du rail transversal (14),
- la tête porte-outil (15) étant mobile à gauche et à droite avec la ligne de centre (N) du rail transversal à l'égard de la direction avant-arrière en alignement avec une ligne de centre de la tête porte-outil (15) à l'égard de la direction avant-arrière.

6. Machine outil selon la revendication 5, où le moyen de guidage de la tête porte-outil (81) est symétrique autour la ligne de centre (N) du rail transversal à l'égard de la direction avant-arrière.

7. Machine outil selon la revendication 5 ou 6 où le moyen d'actionnement de la tête porte-outil est symétrique autour la ligne de centre (N) du rail transversal à l'égard de la direction avant-arrière.
